# EUROPEAN PATENT SPECIFICATION

(11) **EP 3 786 019 B1**
(45) Date of publication and mention of the grant of the patent: **03.04.2024**
(21) Application number: 19793460.7
(22) Date of filing: 22.04.2019
(51) Int. Cl.: G05D 1/02, B60W 30/16, B60W 50/16, G08G 1/09, G08G 1/16, G08G 1/00, G07C 5/08

(54) **CONVOY TRAVELING SYSTEM**
KONVOIFAHRSYSTEM
SYSTÈME DE DÉPLACEMENT DE CONVOI

(30) Priority: 25.04.2018 JP 2018084287
(43) Date of publication of application: 03.03.2021
(73) Proprietor: JTEKT CORPORATION, Aichi-ken, 448-8652 (JP); HINO MOTORS, LTD., Hino-shi, Tokyo 191-8660 (JP)
(72) Inventor: OKUYAMA, Hirokazu, Hino-shi, Tokyo 191-8660 (JP); KOJIMA, Nobuhiko, Hino-shi, Tokyo 191-8660 (JP); ICHINOSE, Naoshi, Hino-shi, Tokyo 191-8660 (JP); YASUI, Hirofumi, Hino-shi, Tokyo 191-8660 (JP); TAKEDA, Masayoshi, Kariya- city, Aichi 4488661 (JP); YONEMURA, Syuuichi, Kariya- city, Aichi 4488661 (JP); KAWAHARA, Sadahiro, Osaka-shi, Osaka 542-8502 (JP); YAMAKAWA, Tomonari, Osaka-shi, Osaka 542-8502 (JP)
(74) Representative: Winter, Brandl - Partnerschaft mbB
(86) International application number: PCT/JP2019/016933
(87) International publication number: WO 2019/208468

(56) References cited:
- EP-A1- 0 991 046
- WO-A1-2016/134770
- JP-A- H1 096 626
- JP-A- H1 096 626
- JP-A- H10 105 885
- JP-A- 2000 113 400
- JP-A- 2005 098 868
- JP-A- 2008 069 827

## Description

### TECHNICAL FIELD

The present disclosure relates to a platooning system.

### BACKGROUND ART

Patent Document 1 describes a typical example of a technique for causing vehicles to platoon through the execution of an inter-vehicle distance control by means of vehicle-to-vehicle communication in the vehicles.

The head vehicle of a platoon may be driven manually by a driver. The manually-driven head vehicle and its subsequent unmanned vehicle coordinate with each other through vehicle-to-vehicle communication so that the vehicles platoon.

### PRIOR ART DOCUMENTS

### Patent Documents

Patent Document 1: Japanese Laid-Open Patent Publication No. 2012-30666

A platooning system having the features of the preamble of claim 1 is known from EP 0 991 046A1. Some background to the technology of platooning systems is laid out in JPH1096626 A and WO2016134770 A1.

### SUMMARY OF THE INVENTION

### Problems that the Invention is to Solve

When the head vehicle of a platoon is manually driven, the driver of the head vehicle needs to operate the platoon while grasping the situation of the subsequent vehicle. However, the driver of the head vehicle may be unable to fully grasp the situation of the subsequent vehicle. Thus, for example, when an anomaly occurs in the subsequent vehicle, the driver of the head vehicle may continue to operate the platoon without noticing the anomaly in the subsequent vehicle.

It is an objective of the present disclosure to provide a platooning system capable of properly transmitting, to a manually-driven head vehicle, the state, such as an anomalous state, of its subsequent vehicle.

### Means for Solving the Problem

A platooning system that can solve the above-described objective is as defined in claim 1. Advantageous embodiments are laid out in the dependent claims. The platooning system includes a vehicle control system installed in each of the vehicles that include a manually-driven head vehicle. The vehicle control system is configured to control a host vehicle such that the host vehicle follows a lead vehicle through wireless communication between the host vehicle and the lead vehicle. The vehicle control system is installed in the host vehicle and the lead vehicle. The vehicle control system includes a sensor configured to detect a state of the host vehicle, an actuator configured to adjust a behavior of the host vehicle, and a controller configured to control the host vehicle. The controller of the head vehicle is configured to physically notify a driver of the head vehicle of a state of a subsequent vehicle by operating the actuator of the head vehicle when a state signal including information that indicates the state of the subsequent vehicle is received through the wireless communication.

### BRIEF DESCRIPTION OF THE DRAWINGS

Fig. 1 is a diagram schematically showing a platooning system according to an embodiment.
Fig. 2 is a block diagram of the vehicle control system in the platooning system of Fig. 1.

### MODES FOR CARRYING OUT THE INVENTION

A platooning system according to an embodiment will now be described.

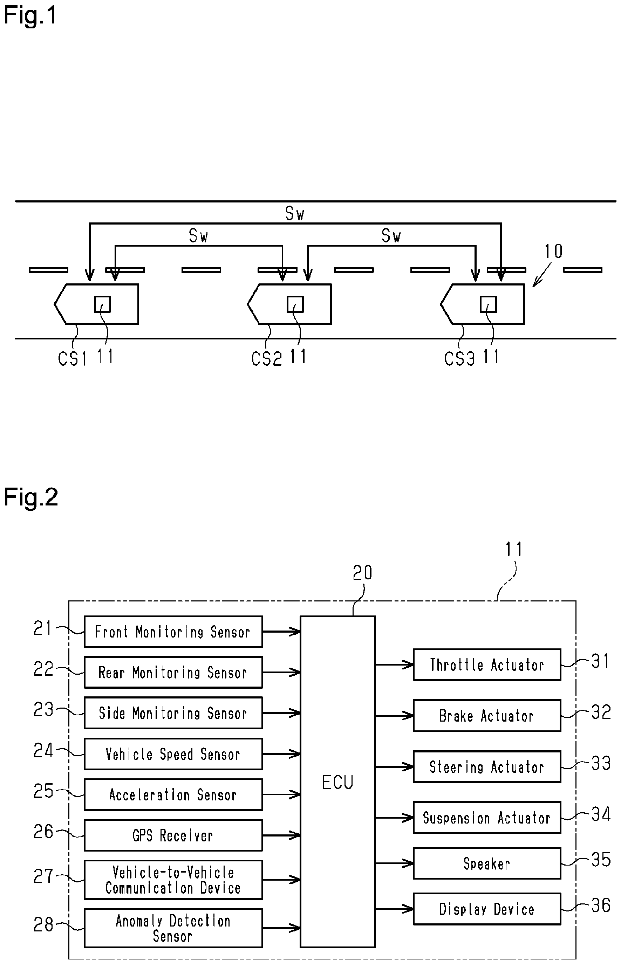

As shown in Fig. 1, a platooning system 10 includes vehicle control systems 11. Each of the vehicle control systems 11 is installed in a corresponding one of platoon-forming vehicles CS1, CS2, and CS3. In Fig. 1, three vehicles CS1, CS2, and CS3 form a platoon.

As shown in Fig. 2, the vehicle control system 11 includes an electronic control unit (ECU) 20, a front monitoring sensor 21, a rear monitoring sensor 22, a side monitoring sensor 23, a vehicle speed sensor 24, an acceleration sensor 25, a GPS receiver 26, a vehicle-to-vehicle communication device 27, and an anomaly detection sensor 28. The vehicle control system 11 further includes a throttle actuator 31, a brake actuator 32, a steering actuator 33, a suspension actuator 34, a speaker 35, and a display device 36.

The front monitoring sensor 21 is provided at the front of a vehicle to monitor the front of the host vehicle and detect the distance between the host vehicle and a vehicle that is traveling right in front of the host vehicle. The rear monitoring sensor 22 is provided at the rear of a vehicle to monitor the rear of the host vehicle and detect the distance between the host vehicle and a vehicle that is traveling right behind the host vehicle. The side monitoring sensor 23 is provided at the side of a vehicle to monitor the side of the host vehicle and detect the distance between the host vehicle and a vehicle that is traveling beside the host vehicle. Examples of these monitoring sensors 21, 22, and 23 include a radar, such as a laser radar or a millimeter wave radar, and a camera.

The vehicle speed sensor 24 detects the traveling speed of the host vehicle. The acceleration sensor 25 detects the acceleration of the host vehicle in the front-rear direction. The GPS receiver 26 receives a position measurement signal from an artificial satellite for a global positioning system (GPS) and uses the received position measurement signal to detect the position (latitude and longitude) of the host vehicle and the azimuth of the host vehicle. The vehicle-to-vehicle communication device 27 executes wireless communication between vehicles. The anomaly detection sensor 28 detects an anomaly in each part of the host vehicle.

The throttle actuator 31 regulates the amount of fuel supplied to the engine by regulating a throttle open degree. The brake actuator 32 regulates a braking force to decelerate the vehicle via a brake device. The steering actuator 33 steers the right and left wheels by moving a steering rod in the axial direction. The suspension actuator 34 changes the vehicle height by driving, for example, an air suspension. The speaker 35 produces a sound. The display device 36 displays various information. The display device 36 includes various warning lights and a display.

The ECU 20 centrally controls the entire vehicle. The ECU 20 may be processing circuitry including: 1) one or more processors that execute various processes according to a computer program (software); 2) one or more dedicated hardware circuits (ASICs) that execute at least part of the various processes, or 3) a combination thereof. The processor includes a CPU and memories such as a RAM and a ROM. The memories store program codes or commands configured to cause the CPU to execute processes. The memories, or computer readable media, include any type of media that are accessible by general-purpose computers and dedicated computers.

The ECU 20 controls an output of the engine via the throttle actuator 31. The ECU 20 increases the amount of fuel supplied to the engine via the throttle actuator 31 when accelerating the vehicle and decreases the amount of fuel supplied to the engine via the throttle actuator 31 when decelerating the vehicle. Also, the ECU 20 controls the braking force of the vehicle via the brake actuator 32. The ECU 20 controls the speed and inter-vehicle distance of the vehicle via the throttle actuator 31 and the brake actuator 32. Further, the ECU 20 controls the steerable angle of a wheel via the steering actuator 33. Furthermore, the ECU 20 controls the vehicle height via the suspension actuator 34.

The ECU 20 of each vehicle sends and receives information, such as vehicle traveling data and identification information (ID), to and from other vehicles via the vehicle-to-vehicle communication device 27. The traveling data is information related to the traveling state of the host vehicle. For example, the traveling data includes information such as the position, speed, acceleration, and azimuth (advancement direction) of the host vehicle. The identification information includes vehicle identification information, which is unique to the host vehicle, and platoon identification information, which is unique to a platoon to which the host vehicle belongs.

The ECU 20 executes adaptive cruise control (ACC). ACC measures the distance between the host vehicle and its preceding lead vehicle via the front monitoring sensor 21 and causes the host vehicle to travel in accordance with the acceleration/deceleration and stopping of the front vehicle while maintaining a preset inter-vehicle distance and speed. The preceding lead vehicle includes a general vehicle that does not belong to a platoon. In ACC, a difference between the lead vehicle and the host vehicle in the width direction is detected by the front monitoring sensor 21, and the steering of the host vehicle is controlled so as to eliminate the detected difference.

For example, the ECU 20 executes a traveling control for a vehicle such that the vehicle travels with a set vehicle speed maintained when its lead vehicle is not detected during the execution of ACC. Further, when a lead vehicle that travels at a speed lower than the set vehicle speed is detected, the ECU 20 executes a following control such that the distance from the lead vehicle remains a preset inter-vehicle distance. The ECU 20 controls the acceleration of a vehicle such that the distance from its lead vehicle does not become smaller than the preset inter-vehicle distance. That is, when the vehicle speed of the lead vehicle is lower than the set vehicle speed, the ECU 20 lowers the vehicle speed of the host vehicle to maintain the inter-vehicle distance.

The ECU 20 executes cooperative adaptive cruise (CACC). CACC causes vehicles laid out in the same lane to platoon by coordinating the vehicles through wireless communication. In platooning, vehicles equipped with the vehicle control systems 11 travel in single file so as to form a platoon while maintaining a certain inter-vehicle distance and a certain speed in a state where a general vehicle is not located between the vehicles in the same lane.

In CACC, the acceleration of the host vehicle is controlled based on the information related to another vehicle in the platoon acquired through vehicle-to-vehicle communication. This causes the host vehicle to follow the preceding vehicle in the platoon such that the distance between the host vehicle and the preceding vehicle remains a target inter-vehicle distance. The platoon-forming vehicles CS1 to CS3 mutually send and receive information such as the specification and traveling data of the host vehicle via the vehicle-to-vehicle communication device 27. That is, the vehicle control systems 11 of all the platoon-forming vehicles CS1 to CS3 share information, such as the specifications and traveling data of all the platoon-forming vehicles CS1 to CS3.

For example, when the brake device is activated in the head vehicle of a platoon, the information indicating the activation is transmitted to all the vehicles in the platoon. All the vehicles forming the platoon automatically decelerate at a proper timing while maintaining the inter-vehicle distances. When the head vehicle accelerates, the accelerating degree of the head vehicle is transmitted to all the vehicles in the platoon. All the vehicles forming the platoon automatically accelerate in order to maintain the inter-vehicle distances and speeds in the entire platoon.

### Operation of Platooning System

The operation of the platooning system will now be described.

As shown in Fig. 1, for example, when the three vehicles CS1, CS2, and CS3 are platooning through the execution of CACC, the traveling states of the two subsequent vehicles CS2 and CS3 are controlled in correspondence with the traveling state of the head vehicle CS1. The head vehicle CS1 may be driven manually by a driver or may travel while maintaining a set vehicle speed through the execution of ACC. The ECUs 20 of the subsequent vehicles CS2 and CS3 control the traveling states of the vehicles CS2 and CS3 such that the vehicles CS2 and CS3 follow the head vehicle CS1.

Each of the vehicles CS2 and CS3 other than the head vehicle CS1 of the platoon may follow its preceding vehicle based on the traveling state of the preceding vehicle. In this case, the traveling state of the second vehicle CS2 of the platoon is controlled based on the traveling state of the head vehicle CS1. The traveling state of the third vehicle CS3 of the platoon is controlled based on the traveling state of the preceding vehicle CS2.

When the head vehicle CS1 of the platoon is driven manually by a driver, the following problem may occur. That is, when the head vehicle CS1 is manually driven, the driver of the vehicle CS1 needs to operate the platoon while grasping the situations of the subsequent vehicles CS2 and CS3. However, the driver of the head vehicle CS1 may be unable to fully grasp the situations of the subsequent vehicles CS2 and CS3. This becomes more noticeable as the number of platoon-forming vehicles increases.

To solve this problem, the platooning system 10 transmits the states of the subsequent vehicles CS2 and CS3 to the head vehicle CS1 as follows.

For example, when an anomaly occurs in a subsequent vehicle, the anomaly is detected by the anomaly detection sensor 28 of the subsequent vehicle. The ECU 20 of the subsequent vehicle wirelessly transmits a state signal Sw, which indicates that an anomaly has occurred in the host vehicle, via the vehicle-to-vehicle communication device 27. Examples of the state signal Sw include the information indicating the contents of an anomaly, a section where an anomaly has occurred, and the identification information of a vehicle where an anomaly has occurred.

Examples of the anomaly detected by the anomaly detection sensor 28 include:
(a1) Anomaly in engine;
(a2) Anomaly in steering device;
(a3) Anomaly in brake device;
(a4) Anomaly in tire; and
(a5) Anomaly in vehicle behavior.

When the state signal Sw is received through vehicle-to-vehicle communication, the ECU 20 of the head vehicle uses the information included in the state signal Sw to grasp the subsequent vehicle where the anomaly has occurred and grasp the contents of the anomaly. Further, the ECU 20 of the head vehicle executes at least one of a first physical notification control and a second physical notification control in order to physically notify the driver of the head vehicle of the anomaly in the subsequent vehicle.

The first physical notification control causes the same anomalous state as that of the subsequent vehicle to occur in the head vehicle in a simulated manner via the various actuators of the head vehicle. The first physical notification control causes the driver of the head vehicle to virtually experience the same anomalous state as that of the subsequent vehicle. This further ensures the transmission of the anomaly in the subsequent vehicle.

However, depending on the contents or degree of an anomaly that has occurred in the subsequent vehicle, it is preferred that the degree of the anomalous state generated in the head vehicle in a simulated manner be limited to a degree that does not hamper driving.

Specific examples of the first physical notification control are as follows.

### (b1) Anomaly in engine of subsequent vehicle (e.g., output decrease)

In this case, the ECU 20 of the head vehicle limits an engine output via the throttle actuator 31 to generate the state of the subsequent vehicle in a simulated manner. The driver of the head vehicle virtually experiences the vehicle behavior of the subsequent vehicle where an anomaly has occurred in the engine. This allows the driver to notice the anomaly in the subsequent vehicle.

### (b2) Flat tire on one side in subsequent vehicle

In this case, the ECU 20 of the head vehicle gives torque to the steering wheel via the steering actuator 33 to generate, in a simulated manner, a steering feel that occurs when the subsequent vehicle has a flat tire on one side. The driver of the head vehicle virtually experiences the vehicle behavior of the subsequent vehicle that has had a flat tire on one side. This allows the driver to notice the anomaly in the subsequent vehicle.

### (b3) Impact in subsequent vehicle

In this case, the ECU 20 of the head vehicle generates, in a simulated manner via the brake actuator 32, the suspension actuator 34, and the like, an impact that has occurred in the subsequent vehicle. The driver of the head vehicle virtually experiences the impact that has occurred in the subsequent vehicle. This allows the driver to notice the anomaly in the subsequent vehicle.

### (b4) Anomaly in vehicle behavior in subsequent vehicle (e.g., such as sudden acceleration change)

In this case, the ECU 20 of the head vehicle generates, in a simulated manner via the brake actuator 32, a change in the acceleration that has occurred in the subsequent vehicle. The driver of the head vehicle virtually experiences the change in the acceleration that has occurred in the subsequent vehicle. This allows the driver to notice the anomaly in the subsequent vehicle.

The second physical notification control physically notifies the driver of the lead vehicle of a section of the subsequent vehicle where an anomaly has occurred.

Specific examples of the second physical notification control are as follows.

### (c1) Anomaly in section of subsequent vehicle causing vehicle to travel (e.g., engine)

In this case, the ECU 20 of the head vehicle vibrates the accelerator pedal via the throttle actuator 31. The driver of the head vehicle feels the accelerator pedal vibrating. This allows the driver to notice that the anomaly has occurred in, for example, the engine of the subsequent vehicle.

### (c2) Anomaly in section of subsequent vehicle changing vehicle advancement direction (e.g., steering device)

In this case, the ECU 20 of the head vehicle vibrates the steering wheel via the steering actuator 33. The driver of the head vehicle feels the steering wheel vibrating. This allows the driver to notice that the anomaly has occurred in, for example, the steering device of the subsequent vehicle.

### (c3) Anomaly in vehicle-braking section of subsequent vehicle (e.g., brake device)

In this case, the ECU 20 of the head vehicle vibrates the brake pedal via the brake actuator 32. The driver of the head vehicle feels the brake pedal vibrating. This allows the driver to notice that the anomaly has occurred in, for example, the brake device of the subsequent vehicle.

### (c4) Anomaly in chassis of subsequent vehicle (e.g., flat tire)

In this case, the ECU 20 of the head vehicle vibrates the suspension via the suspension actuator 34. The driver of the head vehicle feels the suspension vibrating. This allows the driver to notice that the anomaly has occurred in, for example, the chassis of the subsequent vehicle.

Additionally, when an anomaly is detected in the subsequent vehicle, the ECU 20 of the head vehicle may execute control to ensure the safety of the platoon operation or the road traffic safety around the platoon.

For example, the ECU 20 of the head vehicle sets an upper limit speed for the operation speed of the entire platoon in correspondence with the contents of an anomaly that has occurred in the subsequent vehicle. As another option, in order for the entire platoon to decelerate, the ECU 20 of the head vehicle may cause the head vehicle to travel at a speed lower than the operation speed prior to the detection of an anomaly in the subsequent vehicle. As an alternative, depending on the contents or degree of an anomaly that has occurred in the subsequent vehicle, the ECU 20 of the head vehicle may execute an automatic evacuation control. By executing the automatic evacuation control, the ECU 20 of the head vehicle coordinates with the subsequent vehicle through vehicle-to-vehicle communication to move the platoon to a safety place, such as a shoulder, regardless of the driving state of the driver of the host vehicle.

### Advantages of Embodiment

Accordingly, the present embodiment provides the following advantages.
(1) The platooning system 10 physically notifies the driver of the head vehicle of an anomaly in the subsequent vehicle. This allows the anomaly in the subsequent vehicle to be properly transmitted to the driver of the head vehicle.
(2) An anomaly in the subsequent vehicle is immediately transmitted to the head vehicle through vehicle-to-vehicle communication. This allows the driver of the head vehicle to quickly deal with an anomaly that has occurred in the subsequent vehicle. For example, the driver of the head vehicle is capable of quickly decelerating or stopping the host vehicle. This ensures safer operation of a platoon and also contributes to the road traffic safety around the platoon.
(3) The ECU 20 of the head vehicle of a platoon uses the information, included in the state signal Sw, indicating an anomaly that has occurred in the subsequent vehicle to coordinate with the subsequent vehicle through vehicle-to-vehicle communication, thereby limiting the operation of the entire platoon. This ensures the safety of the platoon operation or the road traffic safety around the platoon.

### Modifications

The present embodiment may be modified as follows.

When an anomaly has been detected in a subsequent vehicle, in addition to physically notifying the driver of the host vehicle of the state of the subsequent vehicle, the ECU 20 of the head vehicle may appeal to the visual or hearing sense of the driver of the host vehicle to notify the driver of the host vehicle of the anomaly in the subsequent vehicle. For example, the ECU 20 of the head vehicle produces a warning sound via the speaker 35 of the host vehicle or causes the display device 36 to display a warning.

When an anomaly has been detected in a subsequent vehicle, the ECU 20 of the head vehicle does not have to generate, in a simulated manner, the same anomalous state as the anomaly that has occurred in the subsequent vehicle. For example, the ECU 20 of the head vehicle may vibrate a section unrelated to a section of the subsequent vehicle where the anomaly has occurred, such as a seat, to notify the driver of the head vehicle of the anomaly in the subsequent vehicle. At least the driver of the head vehicle needs to notice that an anomaly has occurred in the subsequent vehicle by a bodily feeling.

The ECU 20 of the head vehicle may physically notify the driver of the head vehicle not only of an anomaly that has occurred in a subsequent vehicle but also of the state of the subsequent vehicle in which the anomaly has not occurred. For example, the ECU 20 of the head vehicle may generate a state change, such as the degree of deceleration of the subsequent vehicle or an increase in the traveling resistance, in a simulated manner via the brake actuator 32. This allows the driver of the head vehicle to operate the platoon while constantly grasping the state of the subsequent vehicle.

## Claims

1. A platooning system (10) that causes vehicles (CS1, CS2, CS3) to platoon, the platooning system (10) comprising the vehicles (CS1, CS2, CS3) including a manually-driven head vehicle (CS1), each vehicle including a vehicle control system (11), wherein
the vehicle control system (11) installed in a host vehicle (CS2, CS3) is configured to control the host vehicle such that the host vehicle follows a lead vehicle through wireless communication between the host vehicle and the lead vehicle,
the host vehicle control system (11) includes
a sensor (21, 22, 23, 24, 25, 26, 28) configured to detect a state of the host vehicle,
an actuator (31, 32, 33, 34) configured to adjust a behavior of the host vehicle, and
a controller (20) configured to control the host vehicle, and
the head vehicle control system (11) includes:
an actuator (31, 32, 33, 34) configured to adjust a behavior of the head vehicle, and
a controller (20) configured to control the head vehicle, and
the controller (20) of the head vehicle is configured to physically notify a driver of the head vehicle of a state of the host vehicle by operating the actuator (31, 32, 33, 34) of the head vehicle when a state signal (Sw) including information that indicates the state of the host vehicle is received through the wireless communication, **characterized in that**
the state signal (Sw) includes information that indicates an anomaly that has occurred in the host vehicle, and
the controller (20) of the head vehicle is configured to cause an anomalous state that has occurred in the host vehicle to occur in the head vehicle in a simulated manner via the actuator (31, 32, 33, 34) of the head vehicle.

2. The platooning system according to claim 1, wherein
the controller (20) of the head vehicle is configured to physically notify, via the actuator (31, 32, 33, 34) of the head vehicle, the driver of the head vehicle of a section of the host vehicle where the anomaly has occurred.

3. The platooning system according to claim 1 or 2, wherein the controller (20) of the head vehicle uses the information, included in the state signal (Sw), indicating the anomaly that has occurred in the host vehicle to coordinate with the host vehicle through the wireless communication, thereby limiting an operation of an entirety of a platoon.

## Patentansprüche

1. Verkehrsfluss-System (10), das Fahrzeuge (CS1, CS2, CS3) veranlasst, einen Konvoi zu bilden, wobei das Verkehrsfluss-System (10) die Fahrzeuge (CS1, CS2, CS3) einschließlich eines manuell angetriebenen Kopffahrzeugs (CS1) umfasst, wobei jedes Fahrzeug ein Fahrzeugsteuersystem (11) enthält, wobei
das Fahrzeugsteuersystem (11), das in einem Trägerfahrzeug (CS2, CS3) installiert ist, konfiguriert ist, um das Trägerfahrzeug so zu steuern, dass das Trägerfahrzeug einem Leitfahrzeug durch drahtlose Kommunikation zwischen dem Trägerfahrzeug und dem Leitfahrzeug folgt,
das Trägerfahrzeugsteuersystem (11) aufweist
einen Sensor (21, 22, 23, 24, 25, 26, 28), der konfiguriert ist, um einen Zustand des Host-Fahrzeugs zu erfassen,
einen Aktuator (31, 32, 33, 34), der konfiguriert ist, um ein Verhalten des Trägerfahrzeugs einzustellen, und
eine Steuereinrichtung (20), die konfiguriert ist, um das Trägerfahrzeug zu steuern, und
das Kopffahrzeugsteuersystem (11) aufweist:
einen Aktuator (31, 32, 33, 34), der konfiguriert ist, um ein Verhalten des Kopffahrzeugs einzustellen, und
eine Steuereinrichtung (20), die konfiguriert ist, um das Kopffahrzeug zu steuern, und
die Steuereinrichtung (20) des Kopffahrzeugs konfiguriert ist, um einen Fahrer des Kopffahrzeugs über einen Zustand des Trägerfahrzeugs physisch zu benachrichtigen, durch Betätigen des Aktuators (31, 32, 33, 34) des Kopffahrzeugs, wenn ein Zustandssignal (Sw) einschließlich Informationen, die den Zustand des Trägerfahrzeugs angeben, durch die drahtlose Kommunikation empfangen wird, **dadurch gekennzeichnet, dass**
das Zustandssignal (Sw) Informationen enthält, die eine Anomalität angeben, die in dem Trägerfahrzeug aufgetreten ist, und
die Steuereinrichtung (20) des Kopffahrzeugs konfiguriert ist, um bewirken, dass ein anomaler Zustand, der in dem Trägerfahrzeug aufgetreten ist, in dem Kopffahrzeug in einer simulierten Weise über den Aktuator (31, 32, 33, 34) des Kopffahrzeugs auftritt.

2. Verkehrsfluss-System nach Anspruch 1, wobei
die Steuereinrichtung (20) des Kopffahrzeugs konfiguriert ist, um den Fahrer des Kopffahrzeugs mittels dem Aktuator (31, 32, 33, 34) des Kopffahrzeugs über einen Abschnitt des Trägerfahrzeugs, in dem die Anomalität aufgetreten ist, physisch zu benachrichtigen.

3. Verkehrsfluss-System nach Anspruch 1 oder 2, wobei die Steuereinrichtung (20) des Kopffahrzeugs die in dem Zustandssignal (Sw) enthaltenen Informationen, welche die in dem Trägerfahrzeug aufgetretene Anomalität angeben, verwendet, um sich durch die drahtlose Kommunikation mit dem Trägerfahrzeug zu koordinieren, wodurch ein Betrieb einer Gesamtheit eines Konvois eingeschränkt wird.

## Revendications

1. Système de circulation en convoi (10) qui amène des véhicules (CS1, CS2, CS3) à circuler en convoi, le système de circulation en convoi (10) comprenant les véhicules (CS1, CS2, CS3) incluant un véhicule de tête conduit manuellement (CS1), chaque véhicule incluant un système de commande de véhicule (11), dans lequel
le système de commande de véhicule (11) installé dans un véhicule hôte (CS2, CS3) est configuré pour commander le véhicule hôte de telle sorte que le véhicule hôte suive un véhicule de tête par le biais d'une communication sans fil entre le véhicule hôte et le véhicule de tête,
le système de commande de véhicule hôte (11) inclut
un capteur (21, 22, 23, 24, 25, 26, 28) configuré pour détecter un état du véhicule hôte,
un actionneur (31, 32, 33, 34) configuré pour ajuster un comportement du véhicule hôte, et
un dispositif de commande (20) configuré pour commander le véhicule hôte, et
le système de commande de véhicule (11) inclut :
un actionneur (31, 32, 33, 34) configuré pour ajuster un comportement du véhicule hôte, et
un dispositif de commande (20) configuré pour commander le véhicule hôte, et
le dispositif de commande (20) du véhicule de tête est configuré pour avertir physiquement un conducteur du véhicule de tête d'un état du véhicule hôte en faisant fonctionner l'actionneur (31, 32, 33, 34) du véhicule de tête lorsqu'un signal d'état (Sw) incluant des informations qui indiquent l'état du véhicule hôte est reçu par le biais de la communication sans fil, **caractérisé en ce que**
le signal d'état (Sw) inclut des informations qui indiquent une anomalie qui s'est produite dans le véhicule hôte, et
le dispositif de commande (20) du véhicule de tête est configuré pour amener un état anormal qui s'est produit dans le véhicule hôte à se produire dans le véhicule de tête de manière simulée via l'actionneur (31, 32, 33, 34) du véhicule de tête.

2. Système de circulation en convoi selon la revendication 1, dans lequel
le dispositif de commande (20) du véhicule de tête est configuré pour avertir physiquement, via l'actionneur (31, 32, 33, 34) du véhicule de tête, le conducteur du véhicule de tête d'une section du véhicule hôte où l'anomalie s'est produite.

3. Système de circulation en convoi selon la revendication 1 ou 2, dans lequel le dispositif de commande (20) du véhicule de tête utilise les informations, incluses dans le signal d'état (Sw), indiquant l'anomalie qui s'est produite dans le véhicule hôte pour se coordonner avec le véhicule hôte par le biais de la communication sans fil, limitant ainsi une opération de l'ensemble d'un convoi.
